# EUROPÄISCHE PATENTANMELDUNG

(11) **EP 4 201 694 A1**
(43) Veröffentlichungstag der Anmeldung: **28.06.2023**
(21) Anmeldenummer: 22213817.4
(22) Anmeldetag: 15.12.2022
(51) Int. Cl.: B44C 1/22, B44C 3/00, B44F 1/06, B60R 13/04

(54) **VERFAHREN ZUR HERSTELLUNG EINES DURCHLEUCHTBAREN AUSSENVERKLEIDUNGSTEILS EINES KRAFTFAHRZEUGS**

(30) Priorität: 21.12.2021 DE 102021134062
(71) Anmelder: REHAU Automotive SE & Co. KG, 95111 Rehau (DE)
(72) Erfinder: Göschel, Rick, 95183 Feilitzsch (DE)

(57) **Zusammenfassung**

Die Erfindung betrifft ein Verfahren zur Herstellung eines durchleuchtbaren Außenverkleidungsteils (1) eines Kraftfahrzeugs, umfassend die folgenden Schritte: Bereitstellen eines Grundkörpers (2) aus einem transluzenten oder transparenten Polymermaterial, welches für Spektralbereiche des sichtbaren Lichts durchstrahlbar ist, und Aufbringen einer Grundierungsschicht (3) auf dem Grundkörper (2), und Aufbringen wenigstens einer farbgebenden Lackschicht (4) auf die Grundierungsschicht (3), wobei die farbgebende Lackschicht (4) die Spektralbereiche des sichtbaren Lichts weitestgehend oder vollständig blockiert, Einbringen einer Vielzahl von Perforationen (5) in die farbgebende Lackschicht (4) und die Grundierungsschicht (3), die die farbgebende Lackschicht (4) und die Grundierungsschicht (3) vollständig durchdringen, um hierdurch eine Durchleuchtung des Grundkörpers (2) zu ermöglichen, wobei das Einbringen mittels eines Laserstrahls oder mittels mehrerer Laserstrahlen erfolgt, wobei die Grundierungsschicht (3) eine Schichtdicke im Bereich von 15 µm bis 30 µm aufweist und, wobei die farbgebende Lackschicht (4) durch die Wahl eines Lackmaterials auf Wasserbasis erzeugt wird, wobei dem Lackmaterial auf Wasserbasis ein Härter im Bereich von 2 Vol.% bis 12 Vol.% zugesetzt ist.

## Beschreibung

Die vorliegende Erfindung betrifft ein Verfahren zur Herstellung eines durchleuchtbaren Außenverkleidungsteils eines Kraftfahrzeugs, umfassend die folgenden Schritte:
- Bereitstellen eines Grundkörpers aus einem transluzenten oder transparenten Polymermaterial, welches für Spektralbereiche des sichtbaren Lichts durchstrahlbar ist, und
- Aufbringen einer Grundierungsschicht auf dem Grundkörper, und
- Aufbringen wenigstens einer farbgebenden Lackschicht auf die Grundierungsschicht, wobei die farbgebende Lackschicht die Spektralbereiche des sichtbaren Lichts weitestgehend oder vollständig blockiert,
- Einbringen einer Vielzahl von Perforationen in die farbgebende Lackschicht und die Grundierschicht, die die farbgebende Lackschicht und die Grundierschicht vollständig durchdringen, um hierdurch eine Durchleuchtung des Grundkörpers zu ermöglichen, wobei das Einbringen mittels eines Laserstrahls oder mittels mehrerer Laserstrahlen erfolgt.

Ein gattungsgemäßes Verfahren kann der Offenlegung DE 102018124384 A1 entnommen werden.

Bei aus dem Stand der Technik bekannten Verfahren besteht die Problematik, dass es beim Einbringen der Perforationen zu einem Partikeleintrag des durch den Laser verdampfen Materials der Grundierungsschicht und der farbgebenden Lackschicht auf die an die Perforationen angrenzende Oberfläche der farbgebenden Lackschicht kommt. Diese Partikel verbinden sich mit der farbgebenden Lackschicht und beeinträchtigen den optischen Eindruck der Oberfläche dieser Lackschicht.

Die Erfindung stellt sich daher die Aufgabe ein Verfahren zur Herstellung eines durchleuchtbaren Außenverkleidungsteils eines Kraftfahrzeuges anzugeben, welche eine derartige Beeinträchtigung der Oberfläche des Außenverkleidungsteils verhindert.

Zur Lösung dieser Aufgabe ist erfindungsgemäß ein nachfolgend beschriebenes Verfahren vorgesehen:
Verfahren zur Herstellung eines durchleuchtbaren Außenverkleidungsteils eines Kraftfahrzeugs, umfassend die folgenden Schritte:
- Bereitstellen eines Grundkörpers aus einem transluzenten oder transparenten Polymermaterial, welches für Spektralbereiche des sichtbaren Lichts durchstrahlbar ist, und
- Aufbringen einer Grundierungsschicht auf dem Grundkörper, und
- Aufbringen wenigstens einer farbgebenden Lackschicht auf die Grundierungsschicht, wobei die farbgebende Lackschicht die Spektralbereiche des sichtbaren Lichts weitestgehend oder vollständig blockiert,
- Einbringen einer Vielzahl von Perforationen in die farbgebende Lackschicht und die Grundierungsschicht, die die farbgebende Lackschicht und die Grundierungsschicht vollständig durchdringen, um hierdurch eine Durchleuchtung des Grundkörpers zu ermöglichen, wobei das Einbringen mittels eines Laserstrahls oder mittels mehrerer Laserstrahlen erfolgt,
wobei erfindungsgemäß die Grundierungsschicht eine Schichtdicke im Bereich von 10 µm bis 70 µm, bevorzugt 15 µm bis 30 µm, bevorzugt 18 µm bis 27 µm, aufweist und, wobei die farbgebende Lackschicht durch die Wahl eines Lackmaterials auf Wasserbasis erzeugt wird, wobei dem Lackmaterial auf Wasserbasis ein Härter im Bereich von 2 Vol.% bis 12 Vol.% zugesetzt ist.

Es wurde erkannt, dass bei einer deutlichen Reduzierung der Schichtdicke der Grundierung und durch das Hinzufügen eines Härters zu dem wasserbasierten Lackmaterial der farbgebenden Lackschicht sowohl die Menge an beim Lasern entstehenden Partikeln als auch die sogenannte Klebrigkeit der farbgebenden Lackschicht in synergetischer Weise Zusammenwirken und eine Anhaftung diese Partikel verhindert. Durch die Zugabe des Härters kommt es zu einer deutlichen Verringerung, bis zur gänzlichen Vermeidung, der Klebrigkeit der farbgebenden Lackschicht vor dem Schritt des Einbringens der Perforationen.

Der Begriff "Licht" meint vorliegend nicht nur den für das menschliche Auge sichtbaren Teil des elektromagnetischen Spektrums, also Wellenlängen zwischen ca. 380 und 780 nm, sondern auch den infrarotnahen und infraroten Wellenlängenbereich von 780 nm bis 1 mm.

Als zusätzlicher Schritt kann ein Aufbringen einer die farbgebende Lackschicht und die eingebrachten Perforationen versiegelnden transparenten Schicht, insbesondere einer Klarlackschicht, über der perforierten farbgebenden Lackschicht erfolgen, wobei die transparente Schicht, insbesondere die Klarlackschicht, für Spektralbereiche des sichtbaren Lichts durchstrahlbar ist. Die transparente Schicht kann eine Klarlackschicht sein, die durch eine Polyurethan-Flutung oder einen Polyurethan Reaktionsspritzguss aufgebracht wird.

Vor dem Auftragen der Klarlackschicht kann hierbei ein Reinigungsschritt der Oberfläche der farbgebenden Lackschicht erfolgen. Der Reinigungsschritt kann eine Nassreinigung mit einem Isopropanol-Wasser Gemisch oder eine CO2-Reinigung umfassen.

Bevorzugt weist das Material der Grundierungsschicht einen Anteil an schwarzfärbenden Zusätzen, insbesondere einen Anteil an Ruß auf.

Als vorteilhafte Ausgestaltung des Verfahrens hat sich ein Härter erwiesen, welcher einen Isocyanathärter umfasst.

Das transluzente oder transparente Polymermaterial des Grundkörpers kann bevorzugt Polypropylen oder Polyethylenterephthalat oder Polycarbonat oder Acrylnitril-Butadien-Styrol oder Polymethylmethacrylat oder Polyamid oder Polystyrol (beispielsweise PS oder ASA) oder ein thermoplastisches Polyester (beispielsweise PBT) oder ein Bioplymer (beispielsweise Zelluloseacetat, Polyhydroxybutyrat, Polymilchsäure, Polyhydroxyalkaonat) enthalten oder hieraus gebildet sein.

Der Schritt des Bereitstellens des Grundkörpers kann ein Spritzgussverfahren oder ein Thermoformungsverfahren oder ein generatives Fertigungsverfahren umfassen.

Der Grundkörper weist bevorzugt eine Wandstärke im Bereich von 0,8 mm bis 5,5 mm auf. Die farbgebende Lackschicht kann mehrschichtig aufgebaut sein.

Auch die Grundierungsschicht kann mehrschichtig aufgebaut sein.

Das herzustellende Außenverkleidungsteil kann insbesondere eine Stoßfängerverkleidung oder eine Kühlerverkleidung oder eine Heckklappenverkleidung oder eine Säulenverkleidung oder eine Türverkleidung oder eine Kotflügelverkleidung oder eine Dachverkleidung oder ein Spoiler eines Kraftfahrzeuges, oder ein Bauteil oder eine Baugruppe oder ein Bestandteil der vorgenannten Teile sein.

Ein weiterer Verfahrensschritt kann das Anordnen eines Leuchtelements zur Aussendung von Licht hinter der Rückseite des Grundkörpers sein, wobei die Rückseite als die Seite definiert ist, die der Sichtseite auf der die farbgebende Lackschicht aufgetragen wird gegenüberliegt.

Teil der Erfindung ist ferner ein Außenverkleidungsteil, hergestellt nach dem vorstehend beschriebenen Verfahren.

### Ausführungsbeispiele

Im Folgenden wird die Erfindung anhand lediglich ein Ausführungsbeispiel darstellender Zeichnungen erläutert. Es zeigen schematisch:

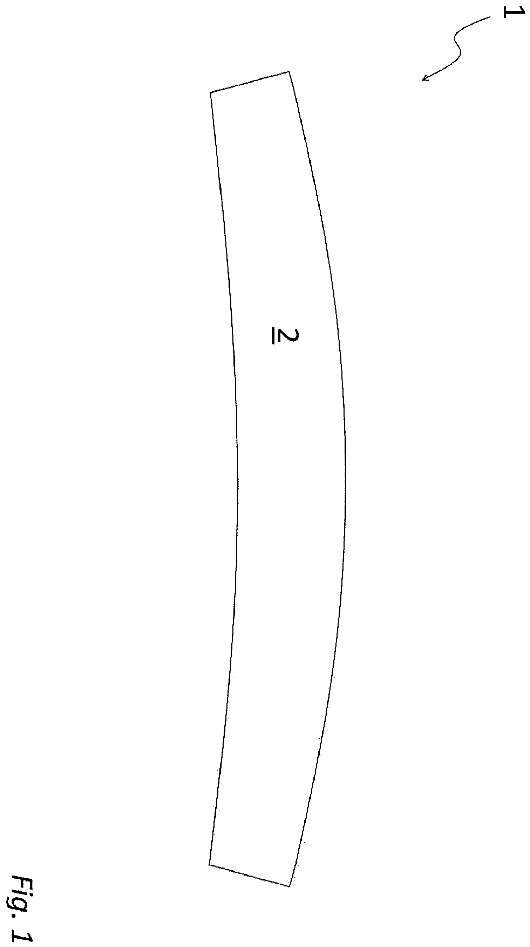

- Fig. 1 bis Figur 5: Querschnittsdarstellungen die den Verfahrensablauf zur Herstellung des Außenverkleidungsteils erläutern.

In den Figuren werden gleiche oder funktionsgleiche Elemente mit den gleichen Bezugszeichen versehen.

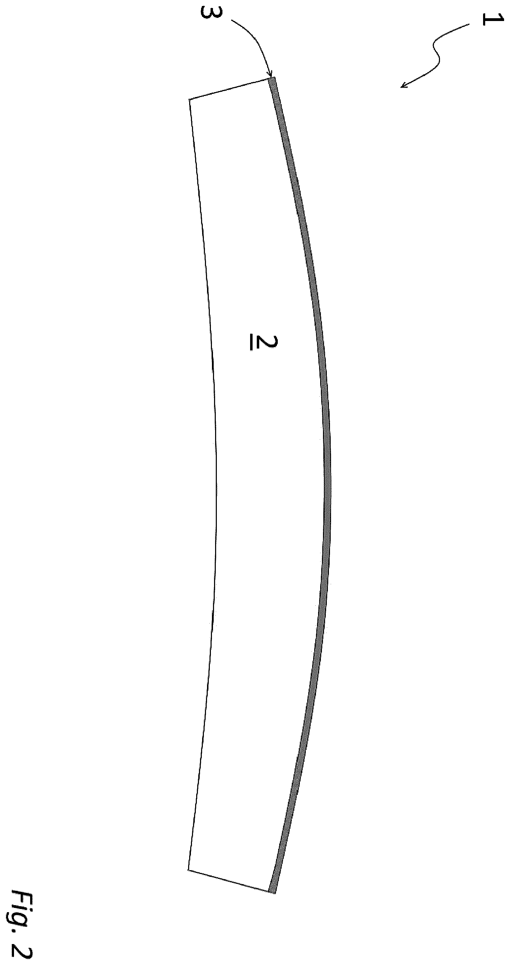

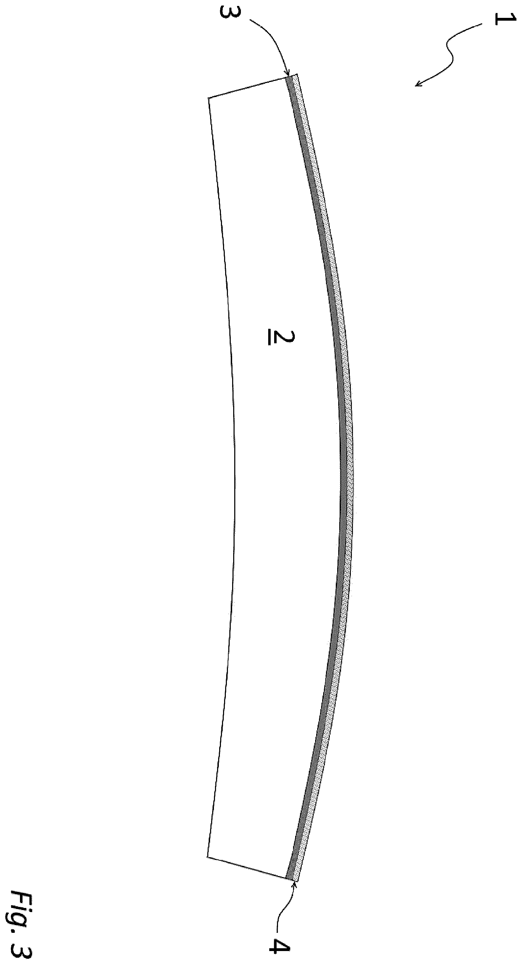

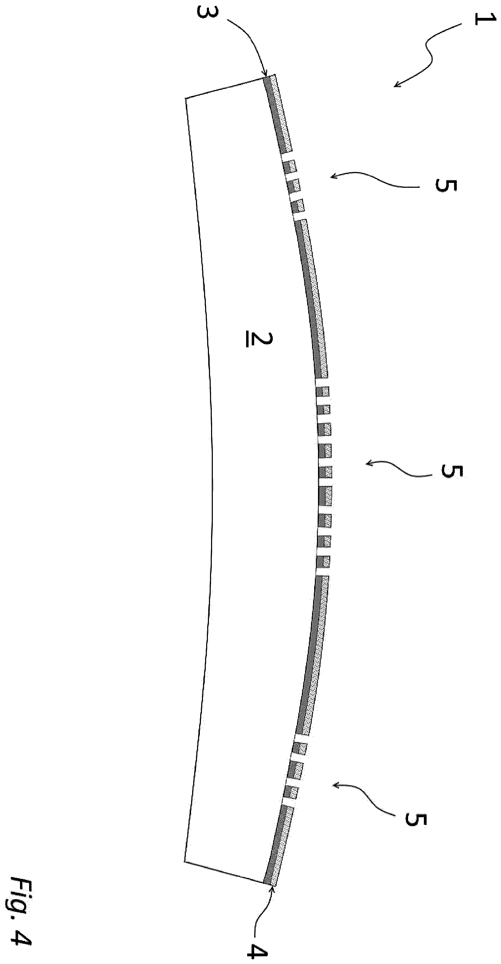

Das erfindungsgemäße Verfahren zur Herstellung eines durchleuchtbaren Außenverkleidungsteils 1 für ein Kraftfahrzeug, umfasst die folgenden Schritte:
Verfahren zur Herstellung eines durchleuchtbaren Außenverkleidungsteils (1) eines Kraftfahrzeugs, umfassend die folgenden Schritte:
- Bereitstellen eines Grundkörpers 2 aus einem transluzenten oder transparenten Polymermaterial, welches für Spektralbereiche des sichtbaren Lichts durchstrahlbar ist (vgl. Fig. 1), und
- Aufbringen einer Grundierungsschicht 3 auf dem Grundkörper 2 (vgl. Fig. 2), und
- Aufbringen wenigstens einer farbgebenden Lackschicht 4 auf die Grundierungsschicht 3 (vgl. Fig. 3), wobei die farbgebende Lackschicht 4 die Spektralbereiche des sichtbaren Lichts weitestgehend oder vollständig blockiert,
- Einbringen einer Vielzahl von Perforationen 5 in die farbgebende Lackschicht 4 und die Grundierungsschicht 3, die die farbgebende Lackschicht 4 und die Grundierungsschicht 3 vollständig durchdringen, um hierdurch eine Durchleuchtung des Grundkörpers 2 zu ermöglichen, wobei das Einbringen mittels eines Laserstrahls oder mittels mehrerer Laserstrahlen erfolgt (vgl. Fig. 4).

Die Grundierungsschicht 3 wird so aufgebracht, dass eine Schichtdicke im Bereich von 15 µm bis 30 µm entsteht oder anders gesprochen die Grundierungsschicht 3 eine Schichtdicke im Bereich von 15 µm bis 30 µm aufweist.

Die farbgebende Lackschicht 4 wird durch die Wahl eines Lackmaterials auf Wasserbasis erzeugt, wobei dem Lackmaterial auf Wasserbasis ein Härter im Bereich von 2 Vol.% bis 12 Vol.% zugesetzt ist.

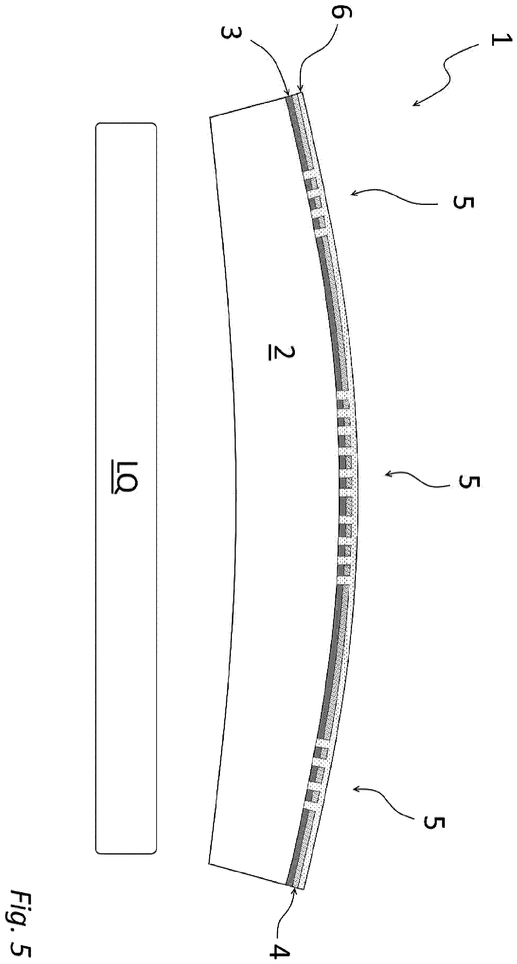

Als zusätzlicher Schritt erfolgt ein Aufbringen einer die farbgebende Lackschicht 4 und die eingebrachten Perforationen 5 versiegelnden Klarlackschicht 6 über der perforierten farbgebenden Lackschicht 4, wobei die Klarlackschicht 6 für Spektralbereiche des sichtbaren Lichts durchstrahlbar ist (vgl. Fig. 5).

Nicht näher dargestellt ist ein weiterer Verfahrensschritt, dass vor Aufbringen der Klarlackschicht 6 ein Reinigungsschritt der Oberfläche der farbgebenden Lackschicht 4 erfolgt. Dieser Reinigungsschritt kann eine Nassreinigung mit einem Isopropanol-Wasser Gemisch und/oder eine CO2-Reinigung umfassen.

Das Material der Grundierungsschicht 3 weist einen Anteil an schwarzfärbenden Zusätzen, insbesondere einen Anteil an Ruß auf.

Der verwendete Härter umfasst einen Isocyanathärter.

Der Schritt des Bereitstellens des Grundkörpers umfasst ein Spritzgussverfahren.

Das vorstehend beschriebene Außenverkleidungsteil 1 kann eine Stoßfängerverkleidung oder eine Heckklappenverkleidung oder eine Kühlerverkleidung oder eine Säulenverkleidung oder eine Türverkleidung oder eine Kotflügelverkleidung oder eine Dachverkleidung oder ein Spoiler eines Kraftfahrzeuges, oder ein Bauteil oder eine Baugruppe oder ein Bestandteil der vorgenannten Teile sein.

Der Grundkörper 2 weist eine Wandstärke im Bereich von 0,8 mm bis 5,5 mm auf.

In der Fig. 5 ist ein weiterer Verfahrensschritt dargestellt, der das Anordnen eines Leuchtelements LQ zur Aussendung von Licht hinter der Rückseite des Grundkörpers 2 umfasst.

## Patentansprüche

1. Verfahren zur Herstellung eines durchleuchtbaren Außenverkleidungsteils (1) eines Kraftfahrzeugs, umfassend die folgenden Schritte:
- Bereitstellen eines Grundkörpers (2) aus einem transluzenten oder transparenten Polymermaterial, welches für Spektralbereiche des sichtbaren Lichts durchstrahlbar ist, und
- Aufbringen einer Grundierungsschicht (3) auf dem Grundkörper (2), und
- Aufbringen wenigstens einer farbgebenden Lackschicht (4) auf die Grundierungsschicht (3), wobei die farbgebende Lackschicht (4) die Spektralbereiche des sichtbaren Lichts weitestgehend oder vollständig blockiert,
- Einbringen einer Vielzahl von Perforationen (5) in die farbgebende Lackschicht (4) und die Grundierungsschicht (3), die die farbgebende Lackschicht (4) und die Grundierungsschicht (3) vollständig durchdringen, um hierdurch eine Durchleuchtung des Grundkörpers (2) zu ermöglichen, wobei das Einbringen mittels eines Laserstrahls oder mittels mehrerer Laserstrahlen erfolgt,
**dadurch gekennzeichnet, dass**
die Grundierungsschicht (3) eine Schichtdicke im Bereich von 15 µm bis 30 µm aufweist und,
dass die farbgebende Lackschicht (4) durch die Wahl eines Lackmaterials auf Wasserbasis erzeugt wird, wobei dem Lackmaterial auf Wasserbasis ein Härter im Bereich von 2 Vol.% bis 12 Vol.% zugesetzt ist.

2. Verfahren nach Anspruch 1, **dadurch gekennzeichnet, dass** als zusätzlicher Schritt ein Aufbringen einer die farbgebende Lackschicht (4) und die eingebrachten Perforationen (5) versiegelnden Klarlackschicht (6) über der perforierten farbgebenden Lackschicht (4) erfolgt, wobei die Klarlackschicht (6) für Spektralbereiche des sichtbaren Lichts durchstrahlbar ist.

3. Verfahren nach Anspruch 2, **dadurch gekennzeichnet, dass** vor dem Auftragen der Klarlackschicht (6) ein Reinigungsschritt der Oberfläche der farbgebenden Lackschicht (4) erfolgt.

4. Verfahren nach Anspruch 3, **dadurch gekennzeichnet** der Reinigungsschritt eine Nassreinigung mit einem Isopropanol-Wasser Gemisch oder eine CO2-Reinigung umfasst.

5. Verfahren nach einem der vorstehenden Ansprüche, **dadurch gekennzeichnet, dass** das Material der Grundierungsschicht (3) einen Anteil an schwarzfärbenden Zusätzen, insbesondere einen Anteil an Ruß aufweist.

6. Verfahren nach einem der vorstehenden Ansprüche, **dadurch gekennzeichnet, dass** der Härter einen Isocyanathärter umfasst.

7. Verfahren nach einem der vorstehenden Ansprüche, **dadurch gekennzeichnet, dass** das transluzente oder transparente Polymermaterial des Grundkörpers (2) Polypropylen und/oder Polycarbonat und/oder Polyethylenterephthalat und/oder Polycarbonat und/oder Acrylnitril-Butadien-Styrol und/oder Polymethylmethacrylat und/oder Polyamid enthält oder hieraus gebildet ist.

8. Verfahren nach einem der vorstehenden Ansprüche, **dadurch gekennzeichnet, dass** der Schritt des Bereitstellens des Grundkörpers (2) ein Spritzgussverfahren oder ein Thermoformungsverfahren oder ein generatives Fertigungsverfahren umfasst.

9. Verfahren nach einem der vorstehenden Ansprüche, **dadurch gekennzeichnet, dass** das Außenverkleidungsteil (1) eine Stoßfängerverkleidung oder eine Heckklappenverkleidung oder eine Kühlerverkleidung oder eine Säulenverkleidung oder eine Türverkleidung oder eine Kotflügelverkleidung oder eine Dachverkleidung oder ein Spoiler eines Kraftfahrzeuges, oder ein Bauteil oder eine Baugruppe oder ein Bestandteil der vorgenannten Teile ist.

10. Verfahren nach einem der vorstehenden Ansprüche, **dadurch gekennzeichnet, dass** der Grundkörper (2) eine Wandstärke im Bereich von 0,8 mm bis 5,5 mm aufweist.
